# EUROPEAN PATENT APPLICATION

(11) **EP 4 312 028 A1**
(43) Date of publication of application: **31.01.2024**
(21) Application number: 22187849.9
(22) Date of filing: 29.07.2022
(51) Int. Cl.: G01N 35/00, G01N 35/04

(54) **SAMPLE VESSEL CLOSURE METHOD, MOVABLE CAP GRIPPER AND SAMPLE VESSEL CLOSURE SYSTEM FOR AUTOMATICALLY CLOSING AN OPEN END OF A SAMPLE VESSEL WITH A CLOSURE CAP**

(71) Applicant: F. Hoffmann-La Roche AG, 4070 Basel (CH); Roche Diagnostics GmbH, 68305 Mannheim (DE)
(72) Inventor: Kees, Marius, 69469 Weinheim (DE)
(74) Representative: Simmons & Simmons LLP (Munich)

(57) **Abstract**

Method for automatically closing an open end of a sample vessel with a closure cap, including, inter alia, the steps of grasping an upper part of the closure cap at its outer circumference by means of a cap gripper with at least two gripper fingers comprising respective top thrust ledges extending at least in part over a recess provided by a lateral gripping face, and of pushing the closure cap into the open end of the sample vessel by means of the top thrust ledge. In addition, a respective movable cap gripper for automatically closing the open end of the sample vessel with the closure cap as well as a respective sample vessel closure system is provided.

## Description

### TECHNICAL FIELD

Generally, the present invention relates to the technical field of sample analysis, such as the analysis of biological samples, and further to the technical field of high throughput analysis of biological samples.

In particular, the present invention is directed to a method for automatically closing an open end of a sample vessel or reaction vessel with a closure cap, and also to a respective movable cap gripper as an instrument for automatically closing the open end of the sample vessel with the closure cap as well as a sample vessel closure system comprising such cap gripper.

In other words, the present invention relates to procedures and devices used, inter alia, in the course of analytical, pre-analytical or post-analytical processing, during which a sample vessel, such as a sample tube or the like, needs to be closed, also referred to as "capped", and/or needs to be closed again after being opened, also referred to as "re-closed" or "recapped", by means of a suitable closure cap, in order to initially seal-off, or cap, the content of the sample vessel after its insertion, or also in order to re-seal, or recap, the content of the sample vessel during processing. As a concrete example, the sample vessel can be used as sample vessel for a thermocycling structure or device, also referred to as thermocycler or thermal cycler, for performing chemical and/or biological reactions, such as, for example, Polymerase Chain Reactions (PCR), wherein such thermocycling device usually includes at least a sample mount for receiving one or several sample vessels or reaction vessels, a heat pump with a heat sink, as well as a control unit for controlling the heating and cooling of the heat pump during thermocycling.

### BACKGROUND

For the analysis of biological samples, the same are usually taken from patients by medical personnel in hospitals or in private practice, for laboratory analysis, e.g. for determining concentration levels of different components within the taken samples. Accordingly, the terms "sample" and "biological sample" refer to material(s) that may potentially contain an analyte of interest, wherein the biological sample can be derived from any biological source, such as a physiological fluid, including blood, saliva, ocular lens fluid, cerebrospinal fluid, sweat, urine, stool, semen, milk, ascites fluid, mucous, synovial fluid, peritoneal fluid, amniotic fluid, tissue, cultured cells, or the like, and wherein the sample can be suspected to contain a certain antigen or nucleic acid.

For many biological, biochemical, diagnostic or therapeutic applications, it is essential to be able to accurately determine the amount or concentration of a certain substance or compound in a biological sample contained in a reaction mixture, such as a certain antigen or nucleic acid as mentioned above. In order to be able to achieve this goal accurately, methods have been developed over the years, such as the widely known Polymerase Chain Reaction (PCR), for example in the form of a real-time PCR, digital PCR (dPCR) or multiplex PCR, which enable the in vitro synthesis of nucleic acids in a biological sample, through which a DNA segment can be specifically replicated, i.e. a cost-effective way to copy or amplify small segments of DNA or RNA in the sample. The development of these methods for amplifying DNA or RNA segments has generated enormous benefits in gene analysis as well as the diagnosis of many genetic diseases, or also in the detection of viral load. Usually, thermal cycling, also referred to as thermocycling, can be utilized to provide heating and cooling of reactants in a sample provided inside a sample vessel, such as a reaction vessel for amplifying such DNA or RNA segments, wherein thermocycler are commonly used in order to achieve an automatic procedure of diagnostic assays based on PCR, in which, during a PCR conduct, the liquid PCR-samples as well as the respective reactants have to be initially transferred into the sample vessel before being heated and cooled to differing temperature levels repeatedly. During the time of thermocycling, and also after removing thermally cycled sample during e.g. analytical processing, the content of the sample vessel must be sealed inside the sample vessel in a fluid-tight manner, e.g. by means of a respective closure cap.

In recent years, there was a need to not only carry our analytical, pre-analytical or post-analytical processing faster, but also process a higher number of samples simultaneously, which resulted in the development of automated processing systems. For example, in the course of simultaneously monitoring multiple nucleic acid amplification reactions during thermocycling biological samples by means of a thermocycler, the known analyzing system further gained an excitation light source for applying excitation energy to the nucleic acid amplification reactions inside the sample vessels, and a sensor for simultaneously detecting light emitted from the multiple nucleic acid amplifications. However, due to the variety of sample tubes and respective varying closure cap designs or models, the handling of sample vessels and their closure became more complex and was often still carried out by laboratory personnel, which was cumbersome, time consuming, costly, and prone to human failure. Accordingly, there is a need to make sample processing faster, cheaper and simpler to perform while achieving high precision as well as efficiency.

In the course of developing devices which can improve sample processing, several attempts were made to improve the handling of sample vessels and respective closure caps when it comes to closing and/or reclosing of these sample vessels, also referred to capping and recapping. For example, US 2020/0072858 A1 describes a system and method for automatic closure of sample vessels, wherein a closure gripper has not only clamping jaws but also a centering piece as an additional component, which the centering piece of the closure gripper must be inserted into a respective recess in a closure cap so that the centering piece can press the closure cap into an open end of a sample tube. Similarly, US 9,505,507 B2 discloses a cap opening and closing mechanism of an automatic analyzer, comprising a cap chuck set with three or more support bodies for gripping a cap of a sample tube, and, in addition, a support section as an additional component for exerting a downward force on the cap from above, for press-fitting the cap into the open end of the sample vessel. However, these solutions result in a complex structure of a closure gripper with a high number of structural components, which, inter alia, increases manufacturing costs for such instrument, and also increases the risk of damage of breakdown of the entire instrument in case of failure of only one of its structural components.

As further known prior art, WO 2021/216931 A1 discloses a gripper apparatus with fingers for gripping a sidewall of a closure cap for a specimen container, wherein each finger of one particular embodiment of such gripper exhibits a recessed inner contact face for improved gripping of an outer circumference of the closure cap, as well as a further recess above the thus structured contact face separating the contact face from a sloped upper region of the finger. However, the slopped upper regions of the gripper fingers in this embodiment are particularly provided for avoiding any contact between the top surface of the closure and bases of respective jaw members of the gripper apparatus in case of slippage between the outer circumference of the closure and the contact faces of the gripper fingers. Accordingly, a downward force according to this disclosure is applied solely by means of the lateral gripping force of the gripper fingers on the closure, without any additional structural component for providing any additional downward force. Thus, with the solution as presented in WO 2021/216931 A1, the already mentioned slippage between the gripper fingers and the closure can occur, which slippage results in the significant risk that the closure cannot be safely inserted into the open end of the specimen container, thus risking spillage and contamination of the specimen during processing of the specimen container.

Due to these and other problems and disadvantages, the prior art suggestions as presented above cannot fulfill the needs of users nowadays and, thus, do not provide satisfying solutions. Therefore, the general need exists these days in the present technical field to provide a method and instrument for being able to securely cap and/or recap a sample vessel automatically, in order to make diagnostic assays a lot faster and, thus, cheaper to perform while maintaining or even improving precision as well as efficiency.

### SUMMARY OF THE INVENTION

The present invention addresses the above described problems of improving a gripping method and instrument for automatically capping and/or recapping a sample vessel with a respective closure cap. According to a first aspect of the present invention, a method for automatically closing an open end of a sample vessel with a closure cap is provided, wherein the method includes a step of providing an open sample vessel, such as a sample tube with an open end and a closed end, in a held manner, a step of providing a closure cap adapted to close, e.g. cap or recap, the open end of the sample vessel, a step of grasping an upper part of the closure cap at its outer circumference by means of a cap gripper with at least two gripper fingers movable towards each other, each gripper finger comprising a distal end with a recessed lateral gripping face for engagement with an outer circumference of the upper part of the closure cap, wherein at least one gripper finger comprises a top thrust ledge extending at least in part over the recess provided by the lateral gripping face, a step of moving the closure cap to the open end of the sample vessel, a step of inserting at least a lower part of the closure cap into the sample vessel by means of the cap gripper, and a step of pushing the closure cap into the open end of the sample vessel by means of the top thrust ledge, by moving the cap gripper towards a closed end of the sample vessel until the closure cap closes the open end of the sample vessel in a fluid-tight manner, thereby capping or recapping the sample vessel. In doing so, the gripping fingers are not only the components of the cap gripper holding the closure cap, but are also the components applying a downward force onto an upper side of the closure cap, for pushing the closure cap into the open end of the sample vessel. Thus, the provision of an additional component for generating the pushing function can be avoided.

Further details and explanations in regard to configuration and structure of the cap gripper and the closure cap above can be gathered further below. The above described method steps are preferably carried out in the given order in a subsequent manner, wherein the steps of providing the sample vessel and the closure cap are interchangeable.

According to a specific embodiment of the present invention, the upper part of the closure cap comprises a surface structure at least at its outer circumference and the lateral gripping face of at least one, but preferably each, gripper finger comprises a surface structure matching the surface structure of the upper part of the closure cap. Based thereon, the step of grasping the upper part of the closure cap includes an engagement between the surface structure of the outer circumference of the upper part of the closure cap and the surface structure of the lateral gripping face, in order to achieve a tight grasp between the cap gripper and the closure cap during the moving step and the inserting step. Such surface structure provided on the outer circumference of the upper part of the closure cap can be implemented in the form of circular grooves or notches, and the matching or interfacing surface structure of the respective gripper finger can be implemented in the form of fitting circular bulges or convexities, or any similar fitting/interlocking structures. Thereby, a tight grasp between the gripping fingers and the closure cap can be ensured, and any slippage or the like of the closure cap can be avoided.

According to a further specific embodiment of the present invention, the step of moving the closure cap to the open end of the sample vessel can include a positioning of a lower end of the closure cap at or within the open end of the sample vessel by means of the cap gripper. In this regard, it is pointed out that a closure cap usually consists of an upper part, by which the closure cap can be grasped, and a lower part, which is to be inserted into the sample vessel, wherein the upper part comprises an upper end, i.e. a top end of the closure cap, and the lower part comprises a lower end, i.e. a bottom end of the closure cap. Thus, by including a particular positioning of the lower end of the closure cap at, i.e. above and close to, the open end of the sample vessel, or already within the open end of the sample vessel, with the lower end of the closure cap already introduced into the open end of the sample vessel to some degree, the step of moving the closure cap to the open end of the sample vessel provides for a safe introduction of the lower end of the closure cap into the open end of the sample vessel.

According to a further specific embodiment of the present invention, the step of inserting at least a lower part of the closure cap into the sample vessel includes additional steps, or sub-steps, before the closure cap is pushed into the open end of the sample vessel. In particular, the step of inserting the lower part of the closure cap into the sample vessel can further include the sub-steps of loosening a grasp on the upper part of the closure cap by moving the at least two gripper fingers marginally away from each other, for disengaging the lateral gripping face of each gripper finger from the outer circumference of the upper part of the closure cap. Thus, with the lower end of the closure cap being already positioned at or within the open end of the sample vessel, and by loosening the grasp on the closure cap, the closure cap sits on the open end of the sample vessel, before the lower part of the closure cap is pushed into the sample vessel by means of the top thrust ledge exerting a downward force onto the upper end of the closure cap. In regard to the optional step of loosening the grasp on the upper part of the closure cap, it is pointed out that the marginal movement of the gripper fingers away from each other entails a movement of each gripper finger away from the closure cap so that the lateral gripping face of each gripper finger disengages from the outer circumference of the closure cap, whereas the gripper fingers still provide sufficient lateral guidance for the closure cap to substantially maintain its position and orientation, and in particular maintain the lower end of the closure cap at or within the open end of the sample vessel. As an example for such marginal movement of the gripper fingers, an extent of movement of each gripper finger away from the closure cap can be within a range of 1 µm to 1 mm. Thus, by loosening the grasp as described above, the top thrust ledge of each finger can come into close contact with the closure cap, enabling a planar transmission of the downward force provided by the top thrust ledge to the top end of the closure cap. In this regard, and according to a further specific embodiment of the present invention, the closure cap can have a substantially planar upper or top surface, and the gripper finger's top thrust ledge can provide a planar lower surface. Thus, during the pushing step, the top thrust ledge and the upper part of the closure cap can come into surface contact with each other. Thereby, an utmost transmission of downward force from the top thrust ledge to the upper end of the closure cap can be achieved.

According to a further specific embodiment of the present invention, the method further comprises a step of moving the at least two gripper fingers away from each other and from the inserted closure cap, and a step of moving the cap gripper away from the closed sample vessel. These additional steps are subsequent to the step of pushing the closure cap into the open end of the sample vessel and can move the cap gripper into its initial position before gripping/grasping the next closure cap to be inserted into another sample vessel. Thus, with these "final" method steps, the cap gripper can be brought into a starting position for carrying out the next automatic closing of the open end of a subsequent sample vessel to be closed.

According to a further specific embodiment of the present invention, the step of grasping the upper part of the closure cap includes enclosing at least 50%, e.g. 80% to 90% of the outer surface of the upper part of the closure cap by means of the lateral gripping faces and the top thrust ledges of the gripper fingers. Thereby, a tight grasp between gripper finger and closure cap can be ensured, and also a sufficient transmission of downward force from the top thrust ledge to the upper end of the closure cap can be ensured, without the closure cap being inclined to tilt away.

According to a further specific embodiment of the present invention, the movement of the gripper fingers towards and away from each other is implemented by a pivoting movement of the gripper fingers about a mutually common fulcrum, for centering the closure cap on a longitudinal central axis of the cap gripper. In further detail, each finger of the cap gripper comprises a distal end for engagement with the closure cap, and a proximal end arranged opposite thereto, wherein the proximal ends of the fingers are fixed to each other in a rotatable manner, e.g. about a common axis or fulcrum, so that the distal ends of the gripper fingers can be pivoted in regard to each other about a common pivotal point. Thus, a centering of the closure cap on an axis common with the cap gripper can be achieved, resulting in that a longitudinal axis of the closure cap can automatically be arranged coaxially with a longitudinal axis of the cap gripper. Thereby, positioning of the closure cap in regard to the sample vessel and transmission of force to the closure cap by means of the cap gripper can be improved.

According to a further specific embodiment of the present invention, a shoulder is provided between the upper part and the lower part of the closure cap, with the upper part of the closure cap comprising a larger outer circumference than the lower part of the closure cap. Here, the larger outer circumference of the upper part of the closure cap can be identical or larger than inner circumference of the open end of the sample vessel. Accordingly, the step of pushing the closure cap into the open end of the sample vessel includes moving the cap gripper towards a closed end of the sample vessel until the shoulder of the closure cap and an upper edge of the sample vessel come into contact with each other. This results in that the lower part of the closure cap is sufficiently inserted into the open end of the sample vessel in order to fluid-tightly seal off the sample vessel by the closure cap, with a contact between the shoulder of the closure cap and the upper edge of the sample vessel additionally providing a fluid-tight seal.

According to another aspect of the present invention, a movable cap gripper for automatically closing an open end of a sample vessel with a closure cap is provided by the present invention, wherein the cap gripper comprises at least two gripper fingers movable towards each other, each gripper finger comprises a distal end with a recessed lateral gripping face for engagement with an outer circumference of an upper part of a closure cap, and the distal end of at least one gripper finger comprises a top thrust ledge extending at least in part over the recess provided by the lateral gripping face. With such structure, the gripping fingers are not only the components of the cap gripper holding the closure cap, but are also the components applying a downward force onto an upper side of the closure cap, for pushing the closure cap into the open end of the sample vessel. Thus, the provision of an additional component for achieving the pushing function can be avoided. In addition, the cap gripper of the present invention might also be used for removing a closure cap from a sample vessel, by tightly gripping the upper part of the closure cap by the gripper fingers and pulling the closure cap out of the sample vessel, by means of frictional force between the distal end of the gripper fingers and the outer circumference of the upper part of the closure cap. In this regard, it can be useful to exchange the gripper fingers by a different kind of fingers more suitable for such decapping.

According to a specific embodiment of the present invention, the lateral gripping face of at least one gripper finger comprises a surface structure adapted to match a surface structure of an outer circumference of the closure cap, for enabling a tight grasp between the cap gripper and the closure cap. Such matching or interfacing surface structure of the at least one -or each- gripper finger can be implemented in the form of fitting circular bulges or convexities, or any similar fitting/interlocking structures, which are adapted to match a respective surface structure provided on the outer circumference of the upper part of the closure cap to be engaged, which structure of the outer circumference of the upper part of the closure cap can be implemented in the form of circular grooves or notches, and the like. Thereby, a tight grasp between the gripping fingers and the closure cap can be ensured, and any slippage or the like of the closure cap can be avoided. Additionally or alternatively, the gripper finger's top thrust ledge provides a planar lower surface, for enabling surface contact between the top thrust ledge and the upper part of the closure cap, resulting in an utmost transmission of downward force from the top thrust ledge to the upper end of the closure cap.

According to a further specific embodiment of the present invention, the gripper fingers are connected with each other about a mutually common fulcrum, for pivoting movement of the gripper fingers towards and away from each other. In further detail, each finger of the cap gripper comprises a distal end for engagement with the closure cap, and a proximal end arranged opposite thereto, wherein the proximal ends of the fingers are fixed to each other in a rotatable manner, e.g. about a common axis or fulcrum, so that the distal ends of the gripper fingers can be pivoted in regard to each other about a common pivotal point. Thus, a centering of the closure cap on an axis common with the cap gripper can be achieved, resulting in that a longitudinal axis of the closure cap can automatically be arranged coaxially with a longitudinal axis of the cap gripper. Thereby, positioning of the closure cap in regard to the sample vessel and transmission of force to the closure cap by means of the cap gripper can be improved.

According to a further specific embodiment of the present invention, each gripper finger comprises a substantial L-shape, with the long flank of the L-shape providing for the proximal end of the gripper finger provided for being fixed in a rotatable manner, and the short flank of the L-shape providing for the distal end of the gripper finger as defined further above. Alternatively or additionally, each gripper finger consists of a main body and a contact member at its distal end, i.e. the short flank of the L-shape can consist of part of the main body and, in addition, a contact member at its distal end, wherein the contact member includes the lateral gripping face and the top thrust ledge, and wherein the contact member is connected to the main part in a removable manner. Thus, the cap gripper can be adapted to different models or structural designs of closure caps, e.g. a surface structure of the lateral gripping face of a gripper finger can be chosen in line with the respective surface structure of an outer circumference of the closure cap to be inserted into the desired sample vessel. Also, since differently sized or shaped sample vessels require differently sized or shaped closure caps, differently shaped or sized recessed of the lateral gripping faces of the gripper fingers can be chosen, in order to achieve sufficiently tight engagement between cap gripper and chosen closure cap. Here, it is pointed out that switching of contact members of a gripper finger can be handled manually or automatically, depending on the frequency of occurrence of necessary switches.

According to a further aspect of the present invention, a sample vessel closure system for automatically closing an open end of a sample vessel with a closure cap is provided by the present invention. Such system comprises a holder for the sample vessel to be closed, a closure cap for the sample vessel to be closed, wherein the closure cap can exhibit a structure as already defined above, and a cap gripper as already defined above. Alternatively or additionally, the distal end of each gripper finger is adapted to the chosen model of the closure cap, wherein a surface structure of an outer circumference of the closure cap and a surface structure of the lateral gripping face of each gripper finger can be adapted to match each other, as has already been described above in further detail.

In other words, a cap gripper of the present invention includes a feature that interfaces with the top of the closure cap, which can be e.g. a so-called flex cap, so that no excessive lateral/side force is needed to hold the closure cap in place during transport and recapping, wherein a structural design of the cap gripper emphasizes a downward pushing force during capping or recapping. Accordingly, gripper fingers of the cap gripper of the present invention were developed to interact with closure caps to avoid damage during capping or recapping. Thus, compared to the known prior art, such damage avoidance is integrated into at least one or each of the gripper fingers, wherein a simpler construction was applied. Tus, a simpler workflow can be implemented, in particular since the gripper fingers do not necessarily need to release the cap first, before the sample vessel can be sealed. Also, there are no additional parts or separately moving parts necessary for the gripper fingers to carry out the capping or recapping function.

Usually, an automated processing system, such as an analytical, pre-analytical or post-analytical processing system, which is commonly employed in state-of-the-art laboratories for automatically processing biological sample, can comprise the instruments to carry out the above described method, such as a cap gripper as described above, or even the entire sample vessel closure system as described above. Here, the term "laboratory instrument" or "instrument" of the laboratory encompasses any apparatus or apparatus component operable to execute one or more processing steps / workflow steps on one or more biological samples, and covers analytical instruments, pre-analytical instruments, and also post-analytical instruments. The expression "processing steps" thereby refers to physically executed processing steps, such as conducting the particular steps of a PCR conduct. The above described method steps can be controlled by a control unit of such automated processing system, which can also control any kind of actuation or monitoring of the above described device and its components, wherein the term "control unit" as used herein encompasses any physical or virtual processing device, such as a CPU or the like, which can also control the entire instrument or even an entire workstation comprising one or more laboratory instruments in a way that workflow(s) and workflow step(s) are conducted. The control unit may, for example, carry different kinds of application software and instruct the automated processing system or a specific instrument or device thereof to conduct pre-analytical, post-analytical and analytical workflow(s)/ workflow step(s). The control unit may receive information from a data management unit regarding which steps need to be performed with a certain sample or sample vessel. Further, the control unit might be integral with a data management unit, may be comprised by a server computer and/or be part of one instrument or even distributed across multiple instruments of the automated processing system. The control unit may, for instance, be embodied as a programmable logic controller running a computer-readable program provided with instructions to perform operations. Here, in order to receive such instructions by a user, a user interface can additionally be provided, wherein the term "user interface" as used herein encompasses any suitable piece of application software and/or hardware for interactions between an operator and a machine, including but not limited to a graphical user interface for receiving as input a command from an operator and also to provide feedback and convey information thereto. Also, a system / device may expose several user interfaces to serve different kinds of users / operators.

As used herein and also in the appended claims, the singular forms "a", "an", and "the" include plural reference unless the context clearly dictates otherwise. Similarly, the words "comprise", "contain" and "encompass" are to be interpreted inclusively rather than exclusively; that is to say, in the sense of "including, but not limited to". Similarly, the word "or" is intended to include "and" unless the context clearly indicates otherwise. The terms "plurality", "multiple" or "multitude" refer to two or more, i.e. 2 or >2, with integer multiples, wherein the terms "single" or "sole" refer to one, i.e. =1. Furthermore, the term "at least one" is to be understood as one or more, i.e. 1 or >1, also with integer multiples. Accordingly, words using the singular or plural number also include the plural and singular number, respectively. Additionally, the words "herein", "above", "previously" and "below" and words of similar import, when used in this application, shall refer to this application as a whole and not to any particular portions of the application.

Furthermore, certain terms are used for reasons of convenience and are not intended to limit the invention. The terms "right", "left", "up", "down", "under" and "above" refer to directions in the figures. The terminology comprises the explicitly mentioned terms as well as their derivations and terms with a similar meaning. Also, spatially relative terms, such as "beneath", "below", "lower", "base", "above", "upper", "top", "proximal", "distal", and the like, may be used to describe one element's or feature's relationship to another element or feature as illustrated in the figures. These spatially relative terms are intended to encompass different positions and orientations of the devices in use or operation in addition to the position and orientation shown in the figures. For example, if a device in the figures is turned over, elements described as "below" or "beneath" other elements or features would then be "above" or "over" the other elements or features. Thus, the exemplary term "below" can encompass both positions and orientations of above and below. The devices may be otherwise oriented (rotated 90 degrees or at other orientations), and the spatially relative descriptors used herein interpreted accordingly. Likewise, descriptions of movement along and around various axes include various special device positions and orientations.

To avoid repetition in the figures and the descriptions of the various aspects and illustrative embodiments, it should be understood that many features are common to many aspects and embodiments. The description of specific embodiments of the disclosure is not intended to be exhaustive or to limit the disclosure to the precise form disclosed. While the specific embodiments of, and examples for, the disclosure are described herein for illustrative purposes, various equivalent modifications are possible within the scope of the disclosure, as those skilled in the relevant art will recognize. Specific elements of any foregoing embodiments can be combined or substituted for elements in other embodiments. Furthermore, while advantages associated with certain embodiments of the disclosure have been described in the context of these embodiments, other embodiments may also exhibit such advantages, and not all embodiments need necessarily exhibit such advantages to fall within the scope of the disclosure as defined by the appended claims. If applicable, technical features from a device or system claim can be used in the course of the claimed method or use, or vice versa. Omission of an aspect from a description or figure does not imply that the aspect is missing from embodiments that incorporate that aspect. Instead, the aspect may have been omitted for clarity and to avoid prolix description. In this context, the following applies to the rest of this description: If, in order to clarify the drawings, a figure contains reference signs which are not explained in the directly associated part of the description, then it is referred to previous or following description sections. Further, for the reason of lucidity, if in a section of a drawing not all features of a part are provided with reference signs, it is referred to other sections of the same drawing. Like numbers in two or more figures represent the same or similar elements.

The following examples are intended to illustrate a specific embodiment of the present invention. As such, the specific modification as discussed hereinafter is not to be construed as limitation on the scope of the present invention. It will be apparent to the person skilled in the art that various equivalents, changes, and modifications may be made without departing from the scope of the present invention, and it is thus to be understood that such equivalent embodiments are to be included herein. Further aspects and advantages of the present invention will become apparent from the following description of the specific embodiment illustrated in the figures.

### BRIEF DESCRIPTION OF THE DRAWINGS

- Figure 1: is a perspective schematic illustration of a cap gripper according to an embodiment of the present invention, in the course of introducing a closure cap into an open end of a sample vessel;
- Figure 2: is a sideview schematic illustration of the cap gripper according to the embodiment as shown in fig. 1, with the closure cap held in a tight manner;
- Figure 3: is a sideview schematic illustration of the cap gripper according to the embodiment as shown in figs. 1 and 2, with released closure cap;
- Figure 4: is a perspective schematic illustration of the cap gripper according to the embodiment as shown in figs. 1 to 3, with released closure cap;
- Figures 5a-c: are schematic illustrations of a gripper finger of the cap gripper according to the embodiment as shown in figs. 1 to 4. in a perspective view in fig. 5a, in a view from below in fig. 5b, and in a sectional view along the line A-A of fig. 5b in fig. 5c; and
- Figure 6: is a flowchart of a method for automatically closing an open end of a sample vessel with a closure cap using the cap gripper according to an embodiment of the present invention.

### REFERENCE NUMERALS

- **1**: cap gripper
- **11**: main body of the cap gripper
- **2**: gripper finger
- **21**: distal end of the gripper finger
- **3**: main body of the gripper finger
- **4**: contact member of the gripper finger
- **41**: lateral gripping face of the gripper finger at its distal end
- **411**: surface structure at the lateral gripping face of the gripper finger
- **42**: top thrust ledge of the gripper finger at its distal end
- **43**: recess
- **44**: screw mounting hole
- **45**: centering notch
- **8**: closure cap
- **81**: upper part of the closure cap
- **811**: surface structure at the upper part of the closure cap
- **812**: top surface of the closure cap
- **82**: lower part of the closure cap
- **821**: lower end of the closure cap
- **83**: shoulder of the closure cap
- **9**: sample vessel / tube
- **91**: open end of the sample vessel / tube
- **911**: upper edge of the sample vessel / tube
- **92**: closed end of the sample vessel / tube
- **CA**: central axis of the cap gripper
- **S01**: method step
- **S02**: method step
- **S03**: method step
- **S04**: method step
- **S05**: method step
- **S06**: method step
- **S07**: method step
- **S08**: method step

### DETAILED DESCRIPTION

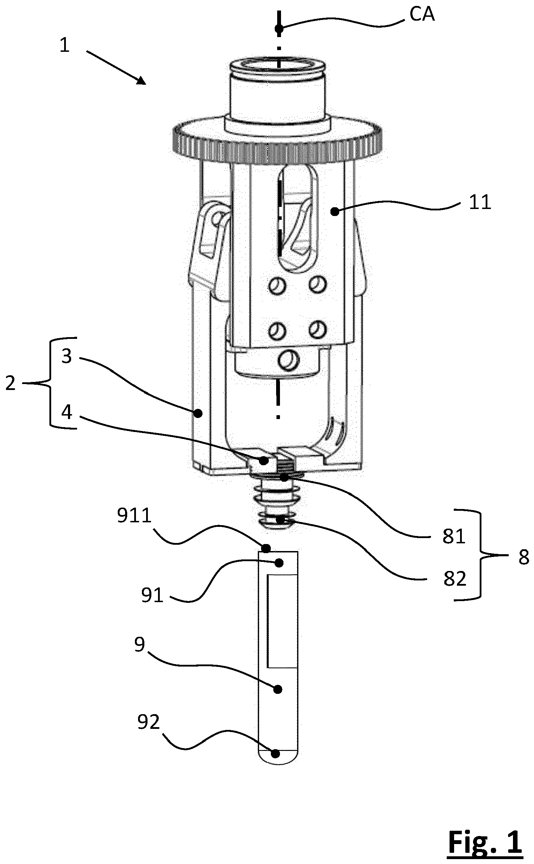

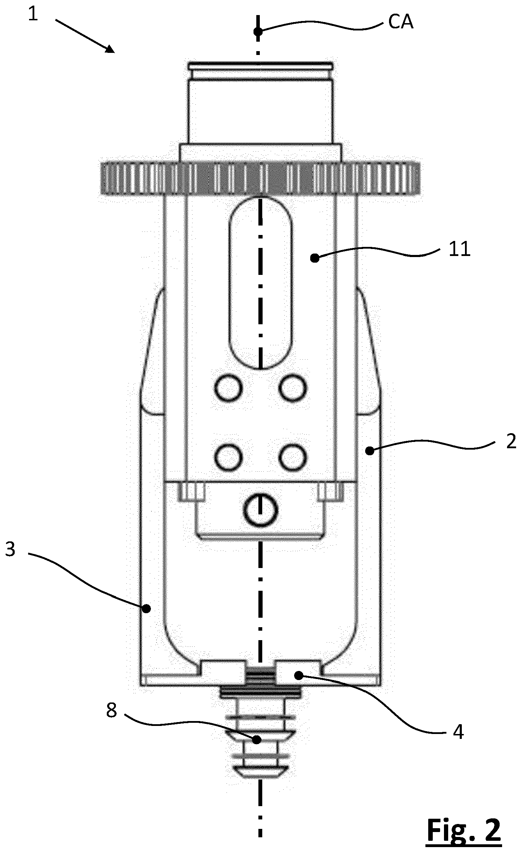

Fig.1 shows a freely movable cap gripper 1 for automatically closing an open end 91 of a sample vessel 9 with a closure cap 8 in a perspective view, with the cap gripper 1 gripping the closure cap 8 in between its two opposing gripper fingers 2, wherein the gripper fingers 2 are connected to a cap gripper main body 11 in a rotationally movable manner. The closure cap 8 is supposed to tightly close an open end 91 of the sample vessel 9 in fig. 9, which open end 91 is opposed to the closed end 92 or bottom end 92 of the sample vessel 9. In this embodiment, the sample vessel 9 is implemented by means of a sample tube 9 with a generally cylindrical shape, having one closed end at its bottom, i.e. the closed bottom end 92, and the open end 91 on its other end, wherein the open end 91 provides for a circular opening. As depicted in fig. 1, the sample tube 9 can also comprise a printed label or electronic tag, as is often used in a laboratory, for identification of the content of the sample tube 9. The gripper fingers 2 are connected to the cap gripper main body 11 in a pivotable manner, such that the gripper fingers 2 can be pivoted about a mutually common fulcrum provided by the main body 11. Thereby, i.e. by achieving a parallel pivoting movement of the gripper fingers 2 towards and away from each other, the gripper fingers 2 are enabled to e.g. apply an identical gripping force from both sides onto the closure cap 8, and also to centre the closure cap 8 on a longitudinal central axis CA of the cap gripper 1, see also fig. 2. Here, the structure of the cap gripper main body 11 is not described in further detail, since the same is not in the focus of the present invention and can vary in line with usual structural compositions of automated laboratory equipment.

As can be gathered from any one of figs. 1 to 4, each gripper finger consists of a gripper finger main body 3 and a contact member 4, which contact member 4 is supposed to get into direct contact with the closure cap 8, whereas the main body 3 of each gripper finger 2 transfers a general pivoting movement of each gripper finger 2 to the contact member 4. Here, each gripper finger main body 3 and its contact member 4 have identical dimensions as an opposing gripper finger main body 3 and its contact member 4, and each gripper finger 2, i.e. its gripper finger main body 3 and respective contact member 4, form a L-shaped structure, wherein, in a closed position of the gripper fingers 2 as depicted in figs. 1 and 2, the opposing contact members 4 are arranged in a way such that the end faces of their distal ends 21 are parallel to each other, and parallel to the central axis CA of the cap gripper 1. Also, in the closed position, the opposing gripper finger main bodies 3 are also arranged parallel to each other, and parallel to the central axis CA of the cap gripper 1, whereas the opposing contact members 4 are arranged in a perpendicular manner in regard to the central axis CA of the cap gripper 1.

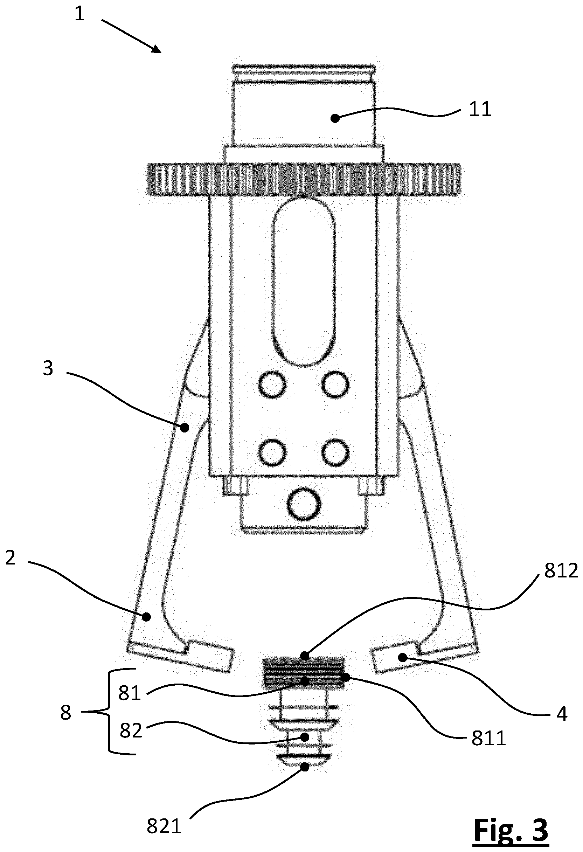

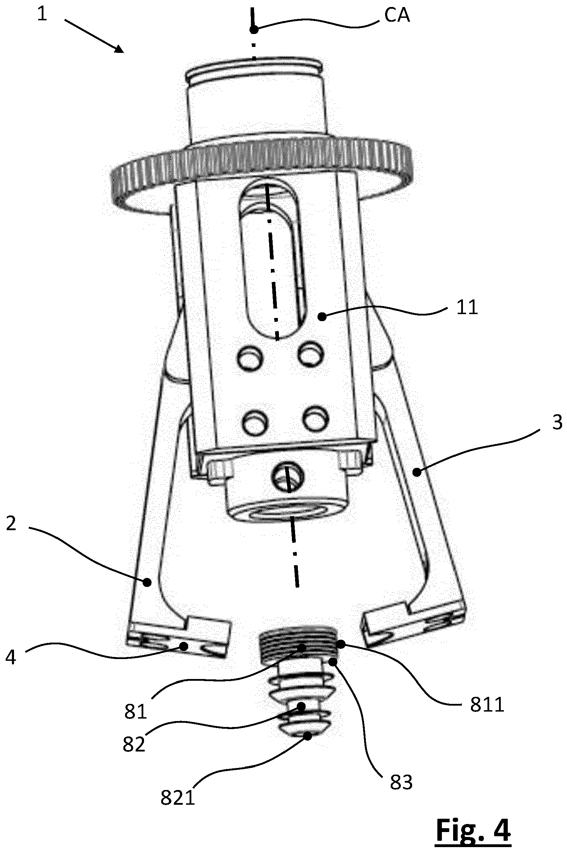

As can be gathered from figs. 3 and 4, the closure cap 8 comprises an upper part 81, a lower part 82 arranged below the upper part 81, and a shoulder 83 arranged in between the upper part 81 and the lower part 82, wherein the upper part 81 of the closure cap 8 exhibits a larger outer circumference than the lower part 82 of the closure cap 8, thereby establishing the shoulder 83. When inserted into an open end 91 of the sample vessel 9 to be closed, the shoulder 83 of the closure cap 8 is to be pushed into the open end 91 of the sample vessel 9 until an upper edge 911 of the sample vessel 9 comes into contact with the bottom side of the shoulder 83 of the closure cap 8.

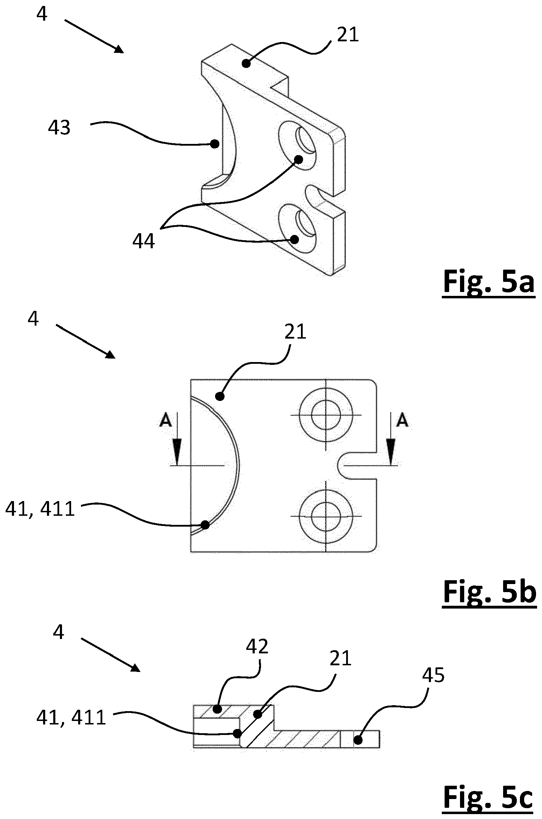

An exemplary contact member 4 of a gripper finger 2 of the cap gripper 1 of the present embodiment is depicted in figs. 5a to 5c, wherein fig. 5a is a perspective side view of the exemplary contact member 4, fig. 5b is a view of the contact member 4 from below, and fig. 5c is a sectional view of the contact member 4 from the side, cut along line A-A depicted in fig. 5b. Each contact member 4 constitutes a distal end 21 of a gripper finger 2 and comprises different areas, such as a lateral gripping face 41 at an inner circumference of a recess 43 at the distal end of the contact member 4, wherein the recess 43 is meant to accommodate a part of the upper part 81 of the closure cap 8. The recess 43 is limited not only by the lateral gripping face 41 but also by a top thrust ledge 42. The lateral gripping face 41 is used to be brought into abutment/contact with an outer circumference of the upper part 81 of the closure cap 8. The top thrust ledge 42 is used to be brought into abutment/contact with a planar upper side or upper side face of the closure cap 8. Since two opposing contact members 4 sandwich the upper part 81 of the closure cap 8, a gripping force is applied from two opposing sides onto an outer circumference of the upper part 81 of the closure cap 8, directed towards each other. In addition, by means of the top thrust ledge 42 of each contact member 4, a pushing force, or thrust force, can be applied onto the upper side of the closure cap 8 by each top thrust ledge 42, thereby enabling the cap gripper 1 to achieve a sufficient pushing force when pushing the closure cap 8 into the open end 91 of the sample vessel 9.

In order to achieve an improved gripping function, the lateral gripping face 41 of at least one or both of the contact members 4 of the gripper fingers 2 are provided with a surface structure 411, e.g. in the form of circular grooves or notches of a corrugation structure, such as juxtaposed lateral anti-slip serrations, which surface structure 411 of the lateral gripping face 41 of the distal end 21 of the gripper fingers 2 matches a respective surface structure 811 at the outer circumference of the upper part 81 of the closure cap 8, which matching or interfacing surface structure 811 can be implemented in the form of fitting circular bulges or convexities, or any similar fitting/interlocking structures. Thus, a hold between contact member 4 and closure cap 8 can be enlarged, for a more secure i.e. more tight grasp between the cap gripper 1 and the closure cap 8. Furthermore, the top thrust ledge 42 of each gripper finger 2 provides a planar lower or bottom surface, as can be gathered from e.g. figs. 5a to 5c, in order to enable sufficient surface contact between a bottom side of the top thrust ledge 42 and a top surface 812 of the upper part 81 of the closure cap 8. Thus, the pushing force as mentioned above can be transmitted from the gripper finger 2 by means of the contact member 4 to the closure cap 8 in an improved manner, when introducing the closure cap 8 into the open end 91 of the sample vessel 9. In this regard, it is pointed out that both contact members 4 when tightly grasping the closure cap 8 do not need to enclose the entire upper part 81 of the closure cap 8, as can be gathered from e.g. figs. 1 and 2. Here, it can be sufficient if the closure cap 8 encloses more than half, i.e. >50%, of the outer surface of the upper part 81 of the closure cap 8, by means of the lateral gripping faces 41 and the top thrust ledges 42 of the gripper fingers 2, i.e. more than half of the outer surface of the upper part 81 of the closure cap 8 is accommodated by the recesses 43 of the contact members 4. In the present embodiment, as a concrete example, the closure cap 8 can encloses 80 -90% of the outer surface of the upper part 81 of the closure cap 8, by means of the lateral gripping faces 41 and the top thrust ledges 42 of the gripper fingers 2, i.e. 80 -90% of the outer surface of the upper part 81 of the closure cap 8 can be accommodated by the recesses 43 of the contact members 4., Thereby, a tight grasp between the gripper fingers 2 and the closure cap 8 can be ensured, and a sufficient transmission of downward force from the top thrust ledges 42 to the upper surface 811 of the closure cap 8 can be ensured, without the closure cap 8 being inclined to tilt away from a longitudinal alignment with the central axis CA. In addition, as can also be gathered from figs. 4 and 5a to 5c, each contact member 4 is attached to its respective main body 3 of the respective gripper finger 2 in a detachable manner, e.g. by means of a screw coupling, wherein one or more mounting holes 44 for receiving respective screws are provided in a proximal part of each contact member 4, as well as a centering notch 45 for allowing a simplified mounting of each contact member 4 at the respective main body 3.

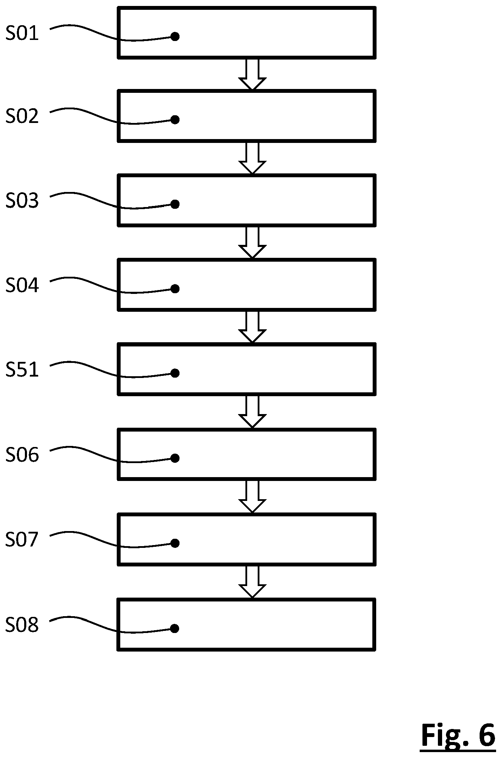

In Fig. 6, a method for automatically closing the open end 91 of the sample vessel 9 with the closure cap 9 is depicted. As can be gathered therefrom, the method comprises up to 8 method steps S01 to S08 in a subsequent order, wherein steps S07 and S08 are merely optional, as is described in the following. In further detail, the method includes a step S01 of providing the open sample tube 9 with its open end 91 and closed end 92 in a held manner, i.e. the sample tube 9 can be held in a stationary holding device, or can also be held by a sample vessel gripper in a movable manner. Further, the method comprises a step S02 of providing the closure cap 8. Then, the method comprises a step S03 of grasping the upper part 81 of the closure cap 8 at its outer circumference with its surface structure 811, by means of the cap gripper 1 with its two gripper fingers 2. Additionally, the method comprises a step S04 of moving the closure cap 8 to the open end 91 of the sample vessel 9, wherein the sample vessel 9 can also be brought into the vicinity of the closure cap 8 in case the sample vessel 9 is held by means of a movable sample vessel gripper. Further, the method comprises a step S05 of inserting at least the lower part 82 of the closure cap 8 into the sample vessel 9, meaning that the lower part 82 of the closure cap 8 is introduced, at least in part, into the open end 91 of the sample vessel 9. Then, the method comprises a step S06 of pushing the closure cap 8 into the open end 91 of the sample vessel 9 by means of the top thrust ledges 42, by moving the cap gripper 1 towards a closed end 92 of the sample vessel 9 until the closure cap 8 closes the open end 91 of the sample vessel 9 in a fluid-tight manner, thereby capping or recapping the sample vessel 9. In view of the later, it might also be reasonable to provide a moving mechanism for the sample vessel 9 itself, such that not only the cap gripper 1 can be moved towards the sample vessel 9, but that the sample vessel 9 can also be moved towards the cap gripper 1 in case of the provision of a movable sample vessel gripper. This can result in that a closure of the sample vessel 9 can be achieved either by movement of the cap gripper 1, by movement of the sample vessel 9, or by means of a combined movement of both the sample vessel 9 and the cap gripper 1 towards each other. In addition, the method further comprises optional steps S07 and S08, i.e. a step S07 of moving the at least two gripper fingers 2 away from each other and from the inserted closure cap 8, and a step S08 of moving the cap gripper 1 away from the closed sample vessel 9. These optional steps are subsequent to the step S06 of pushing the closure cap 8 into the open end 91 of the sample vessel 9 and, as an example of the automated method, can move the cap gripper 1 back into its initial position before gripping/grasping the next closure cap 8 to be inserted into another sample vessel 9. Thus, with these optional method steps, the cap gripper 1 is brought into its next starting position for carrying out the next automatic sample vessel closing process.

The above described method steps S01 to S06 and, optionally, also S07 and S08 can be carried out in the given order in a subsequent manner, wherein the steps S01 and S02 of providing the sample vessel 9 and the closure cap 8 can be used in an interchangeable manner.

While the current invention has been described in relation to its specific embodiments, it is to be understood that this description is for illustrative purposes only. Accordingly, it is intended that the invention be limited only by the scope of the claims appended hereto.

## Claims

1. A method for automatically closing an open end of a sample vessel (9) with a closure cap (8), including the following steps:
(S01) providing an open sample vessel (9) in a held manner;
(S02) providing a closure cap (8) adapted to close the open end (91) of the sample vessel (9);
(S03) grasping an upper part (81) of the closure cap (8) at its outer circumference by means of a cap gripper (1) with at least two gripper fingers (2) movable towards each other, each gripper finger (2) comprising a distal end (21) with a recessed lateral gripping face (41) for engagement with an outer circumference of the upper part (81) of the closure cap (8), wherein at least one gripper finger (2) comprises a top thrust ledge (42) extending at least in part over a recess (43) provided by the lateral gripping face (41);
(S04) moving the closure cap (8) to the open end (91) of the sample vessel (9);
(S05) inserting at least a lower part (82) of the closure cap (8) into the sample vessel (9) by means of the cap gripper (1), and
(S06) pushing the closure cap (8) into the open end (91) of the sample vessel (9) by means of the top thrust ledge (42), by moving the cap gripper (1) towards a closed end of the sample vessel (9) until the closure cap (8) closes the open end (91) of the sample vessel (9) in a fluid-tight manner.

2. The method of claim 1, wherein the upper part (81) of the closure cap (8) comprises a surface structure (811) at least at its outer circumference and the lateral gripping face (41) of at least one gripper finger (2) comprises a surface structure (411) matching the surface structure (811) of the upper part, and wherein the step (S03) of grasping the upper part (81) of the closure cap (8) includes an engagement between the surface structure (811) of the outer circumference of the upper part (81) of the closure cap (8) and the surface structure (411) of the lateral gripping face (41), for tight grasp between the cap gripper (1) and the closure cap (8) during the moving step (S04) and the inserting step (S05).

3. The method of claim 1 or 2, wherein the step (S04) of moving the closure cap (8) to the open end (91) of the sample vessel (9) includes positioning a lower end (821) of the closure cap (8) at or within the open end (91) of the sample vessel (9) by means of the cap gripper (1).

4. The method of any one of the preceding claims, wherein, before the closure cap (8) is pushed into the open end (91) of the sample vessel (9), the step (S05) of inserting at least a lower part (82) of the closure cap (8) into the sample vessel (9) includes loosening a grasp on the upper part (81) of the closure cap (8) by moving the at least two gripper fingers (2) marginally away from each other, for disengaging the lateral gripping face (41) of each gripper finger (2) from the outer circumference of the upper part (81) of the closure cap (8).

5. The method of any one of the preceding claims, wherein the method further comprises a step (S07) of moving the at least two gripper fingers (2) away from each other and from the inserted closure cap (8), and a step of moving (S08) the cap gripper (1) away from the closed sample vessel (9).

6. The method of any one of the preceding claims, wherein the step of grasping the upper part (81) of the closure cap (8) includes enclosing at least 50% of the outer surface of the upper part (81) of the closure cap (8) by means of the lateral gripping face (41) and the top thrust ledge (42) of each gripper finger (2).

7. The method of any one of the preceding claims, wherein the movement of the gripper fingers (2) towards and away from each other is implemented by a pivoting movement of the gripper fingers (2) about a mutually common fulcrum, for centering the closure cap (8) on a longitudinal central axis (CA) of the cap gripper (1).

8. The method of any one of the preceding claims, wherein a shoulder (83) is provided between the upper part (81) and the lower part (82) of the closure cap (8), with the upper part (81) of the closure cap (8) comprising a larger outer circumference than the lower part (82) of the closure cap (8), and wherein the step (S06) of pushing the closure cap (8) into the open end (91) of the sample vessel (9) includes moving the cap gripper (1) towards a closed end (92) of the sample vessel (9) until the shoulder (83) of the closure cap (8) and an upper edge (911) of the sample vessel (9) come into contact with each other.

9. The method of any one of the preceding claims, wherein the closure cap (8) has a substantially planar top surface (812), and the top thrust ledge (42) of each gripper finger (2) provides a planar lower surface, and wherein, during the pushing step (S06) , the top thrust ledge (42) and the top surface (812) of the closure cap (8) are in surface contact with each other.

10. The method of any one of the preceding claims, wherein the method steps are carried out in the given order in a subsequent manner.

11. A movable cap gripper (1) for automatically closing an open end (91) of a sample vessel (9) with a closure cap (8), wherein
the cap gripper (1) comprises at least two gripper fingers (2) movable towards each other,
each gripper finger (2) comprises a distal end (21) with a recessed lateral gripping face (41) for engagement with an outer circumference of an upper part (81) of a closure cap (8), and
the distal end (21) of at least one gripper finger (2) comprises a top thrust ledge (42) extending at least in part over a recess (43) provided by the lateral gripping face (41).

12. The cap gripper (1) of claim 11, wherein
the lateral gripping face (41) of at least one gripper finger (2) comprises a surface structure (411) adapted to match a surface structure (811) of an outer circumference of the closure cap (8), for enabling a tight grasp between the cap gripper (1) and the closure cap (8); and/or
the top thrust ledge (42) of each gripper finger (2) provides a planar lower surface, for enabling surface contact between the top thrust ledge (42) and the upper part (81) of the closure cap (8).

13. The cap gripper (1) of claim 11 or 12, wherein the gripper fingers (2) are connected with each other about a mutually common fulcrum, for pivoting movement of the gripper fingers (2) towards and away from each other, for centering the closure cap (8) on a longitudinal central axis (CA) of the cap gripper (1).

14. The cap gripper (1) of any one of claims 11 to 13, wherein
each gripper finger (2) is substantially L-shaped; and/or
each gripper finger (2) consists of a main body (3) and a contact member (4) at its distal end (21), wherein the contact member (4) includes the lateral gripping face (41) and the top thrust ledge (42), and wherein the contact member (4) is connected to the main part (3) in a removable manner, for adapting the cap gripper (1) to different models of closure caps (8).

15. A sample vessel closure system for automatically closing an open end (91) of a sample vessel (9) with a closure cap (8), the system comprising a holder for the sample vessel (9) to be closed, a closure cap (8) for the sample vessel (9) to be closed, and a cap gripper (1) according to any one of claims 11 to 14, preferably wherein the distal end (21) of each gripper finger (2) is adapted to the model of the closure cap (8), further preferably wherein a surface structure (811) of an outer circumference of the closure cap (8) and a surface structure (411) of the lateral gripping face (41) of each gripper finger (2) are adapted to match each other.
